**Europäisches Patentamt**

**European Patent Office**

**Office européen des brevets**

(19)

(11) Numéro de publication: **0 123 599**
**B1**

(12)

# FASCICULE DE BREVET EUROPEEN

(45) Date de publication du fascicule du brevet:
**27.01.88**

(21) Numéro de dépôt: **84400698.1**

(22) Date de dépôt: **09.04.84**

(51) Int. Cl.⁴: **G 21 C 9/00**, G 21 C 13/10,
F 16 B 2/00, B 23 P 19/02

(54) **Dispositif de fixation démontable d'une structure interne dans une enveloppe telie qu'un conduit ou un récipient.**

(30) Priorité: **14.04.83 FR 8306110**

(43) Date de publication de la demande:
**31.10.84 Bulletin 84/44**

(45) Mention de la délivrance du brevet:
**27.01.88 Bulletin 88/4**

(84) Etats contractants désignés:
**BE DE GB IT**

(56) Documents cités:
**EP - A - 0 028 189**
**FR - A - 2 203 041**

(73) Titulaire: **COMMISSARIAT A L'ENERGIE ATOMIQUE,**
**31/33, rue de la Fédération, F-75015 Paris (FR)**

(72) Inventeur: **Aubert, Gilles, 9, Avenue des Chênes,**
**F-91400 Orsay (FR)**

(74) Mandataire: **Mongrédien, André et al, c/o**
**BREVATOME 25, rue de Ponthieu, F-75008 Paris (FR)**

## Description

La présente invention se rapporte à un dispositif de fixation démontable d'une structure interne contre une paroi de section circulaire formée à l'intérieur d'une enveloppe telle qu'un conduit ou un récipient.

Un tel dispositif s'applique en particulier à la fixation de certaines structures à l'intérieur du circuit primaire des réacteurs nucléaires à eau. Toutefois, cette application n'est pas limitative et le dispositif selon l'invention peut être utilisé dans tous les cas où il est nécessaire de fixer de façon démontable une structure à l'intérieur d'une paroi de section circulaire sans endommager cette paroi et sans qu'il existe un jeu entre la structure interne et la paroi dans laquelle elle est fixée.

Dans le cas particulier de la fixation des structures internes dans les enceintes et les conduits du circuit primaire des réacteurs nucléaires à eau sous pression, cette fixation doit répondre à des conditions très difficiles à satisfaire. En effet, la fixation des structures internes ne doit pas porter atteinte à la sécurité de l'enveloppe de pression du réacteur et elle doit permettre l'inspection en service de l'enveloppe par l'intérieur du circuit primaire. Cette dernière astreinte exige la démontabilité des structures internes et l'absence de relief sur la paroi interne de l'enveloppe de pression. De plus, en raison des forces hydrodynamiques engendrées par l'écoulement du réfrigérant, le maintien des structures internes doit être effectué sans jeu pour éviter les vibrations. En outre, pour ne pas augmenter la perte de charge du circuit, le dispositif de fixation des structures internes doit présenter autant que possible en encombrement minimum. Enfin, le démontage des structures internes doit pouvoir être effectué à distance dans les parties les plus radioactives du circuit, ce qui interdit l'utilisation de mécanismes complexes.

Dans l'état actuel de la technique, la fixation de certaines structures internes des réacteurs nucléaires est parfois réalisée par serrage thermique. Cette technique de fixation consiste à utiliser l'élévation de température d'un circuit pour mettre à profit une dilatation thermique de la structure interne supérieure à celle de l'enveloppe de pression. A cet effet, on utilise pour les deux structures des matériaux présentant des coefficients de dilatation thermique différents.

Cette technique classique présente cependant plusieurs inconvénients. En premier lieu, la dilatation thermique différentielle entre les matériaux constituant les deux structures est faible, de telle sorte qu'elle nécessite des usinages très précis. De plus, elle a pour conséquence des dilatations différentielles longitudinales qui peuvent engendrer des risques divers. Elle peut aussi entraîner des contraintes élevées dans l'enveloppe de pression. Enfin, les pièces sont usinées de façon à être fixées à la température normale de fonctionnement du réacteur, ce qui implique que les structures internes soient maintenues avec du jeu à l'état froid et entraîne un risque élevé de vibrations dans cette situation.

La présente invention a précisément pour objet un dispositif de fixation démontable ne présentant pas les inconvénients de cette technique antérieure et permettant notamment d'assurer de façon particulièrement simple une fixation à froid démontable et sans jeu pouvant être utilisée dans tous les cas où une fixation de ce type est souhaitable.

A cet effet et conformément à la présente invention, il est proposé un dispositif de fixation démontable d'une structure interne contre une paroi de section circulaire formée à l'intérieur d'une enveloppe, caractérisé en ce qu'il comprend au moins une pièce annulaire déformable comportant des patins en relief régulièrement répartis sur la périphérie de sa face externe, le diamètre extérieur de ladite pièce au droit des patins étant légèrement supérieur au diamètre de ladite paroi interne lorsque le dispositif est au repos, et pouvant être réduit à une valeur inférieure au diamètre de ladite paroi interne lorsque des forces radiales sont appliquées entre les patins à l'intérieur de ladite pièce annulaire déformable.

Dans le cas d'une enveloppe sous pression, la pièce annulaire déformable peut présenter la forme d'une virole comportant une série de patins en relief à chacune de ses extrémités, de façon à constituer une structure interne de sécurité permettant de limiter à une valeur donnée le débit de fuite en cas de rupture de l'enveloppe sous pression.

Dans le cas où la structure interne comporte un conduit disposé à l'intérieur de la pièce annulaire déformable, afin notamment de séparer deux écoulements de fluide, ce conduit peut être relié à la pièce annulaire déformable par des ailettes radiales situées entre les patins, de telle sorte que lesdites forces radiales puissent être appliquées au conduit interne et transmis à la pièce annulaire déformable par lesdites ailettes. Dans ce cas, la pièce annulaire déformable peut présenter la forme d'une virole constituant une structure interne de sécurité losque l'enveloppe est sous pression. Le conduit interne peut aussi être fixé à l'intérieur de l'enveloppe par plusieurs anneaux répartris le long de ce conduit.

On décrira maintenant, à titre d'exemple non limitatif, différentes variantes de réalisation du dispositif de fixation démontable selon l'invention en se référant aux dessins annexés dans lesquels:

– la fig. 1 représente en section droite un dispositif de fixation démontable selon l'invention appliqué contre la paroi interne circulaire d'une enveloppe sur la moitié supérieure de la figure, et en cours de montage ou de démontage, sur la moitié inférieure de la figure;

– la fig. 2 est une vue en coupe longitudinale d'un conduit sous pression dans lequel a été fixé un manchon de sécurité à l'aide du dispositif de fixation démontable selon l'invention,

– la fig. 3 est une vue en coupe longitudinale d'un récipient sous pression à l'intérieur duquel a été monté un manchon de sécurité de la même manière que sur la fig. 2; et

– la fig. 4 représente en section droite la fixation d'un conduit interne à l'intérieur d'un conduit de plus grand diamètre au moyen du dispositif selon l'invention.

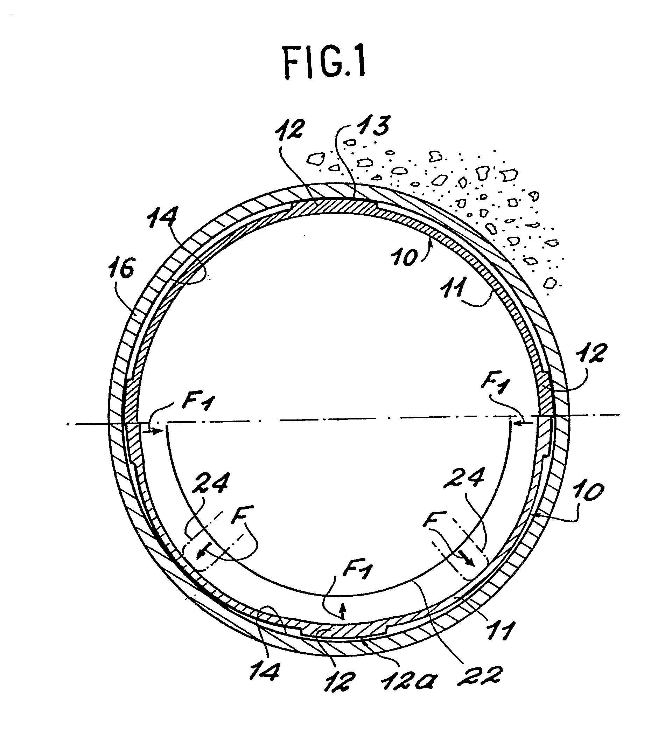

Comme l'illustre en particulier la fig. 1, le principe du dispositif de fixation selon l'invention est particulièrement simple.

Ce dispositif 10 comprend essentiellement une pièce annulaire déformable 11 de plus ou moins grande longueur. Comme on le verra ultérieurement, la pièce 11 peut ainsi constituer un simple anneau lorsqu'elle est courte ou au contraire une virole lorsqu'elle est plus longue.

Conformément à l'invention, la pièce annulaire 11 est munie, sur sa face externe, d'un certain nombre de patins 12 (4 dans la variante de réalisation représentée). Ces patins 12 sont disposés à intervalles réguliers à la périphérie de la pièce 11 (par exemple à 90° les uns des autres sur la fig. 1). La surface externe 13 de chacun des patins 12 définit en section droite un arc de cercle concentrique au reste de la pièce 11.

Lorsqu'elle est au repos, la pièce 11 présente au droit des patins 12 (c'est-à-dire au niveau des surfaces 13) un diamètre externe légèrement supérieur au diamètre interne défini par la paroi interne cylindrique 14 de la pièce 16 dans laquelle on désire fixer le dispositif.

Conformément à l'invention, la pièce 11 peut être déformée pour perdre sa forme annulaire, mais sans que sa longueur circonférentielle ne soit modifiée. En conséquence, il est possible en appliquant à l'intérieur de cette pièce de forces radiales F au milieu des intervalles formés entre les patins 12 (c'est-à-dire à 45° par rapport à ceux-ci sur la fig. 1) de déformer la pièce 11 comme on l'a représenté sur la moitié inférieure de la fig. 1. Cela se traduit par un accroissement du diamètre de la pièce 11 à ce niveau. Etant donné que la longueur circonférentielle de cette pièce reste constante, le diamètre de la pièce 11 au droit des patins (c'est-à-dire au niveau des surfaces 13) est donc réduit à une valeur inférieure au diamètre interne de la paroi 14 (flèches $F_1$ sur la fig. 1). Le dispositif 10 peut alors être introduit à froid dans l'alésage 14 ou au contraire être retiré de cet alésage sans difficulté.

L'application des forces radiales F peut être réalisée par tout moyen, et notamment à l'aide d'un bras 22 pénétrant axialement à l'intérieur de la pièce 11 et muni de vérins 24 disposés radialement.

Lorsque cesse l'application des forces radiales F, la pièce 11 tend à reprendre sa forme normale. Lorsque ce relâchement est réalisé à la suite de l'introduction de la pièce à l'intérieur de la paroi cylindrique 14, il a donc pour effet un serrage élastique à froid des patins 12 sur la paroi interne de l'enveloppe 16, comme on l'a représenté sur la moitié supérieure de la fig. 1.

Bien entendu, le nombre et la géométrie des patins 12 en relief sur la paroi externe de la pièce annulaire déformable 11 sont optimisés en fonction des conditions particulières de l'application envisagée.

Le dispositif 10 est réalisé de préférence en métal à haute limite élastique.

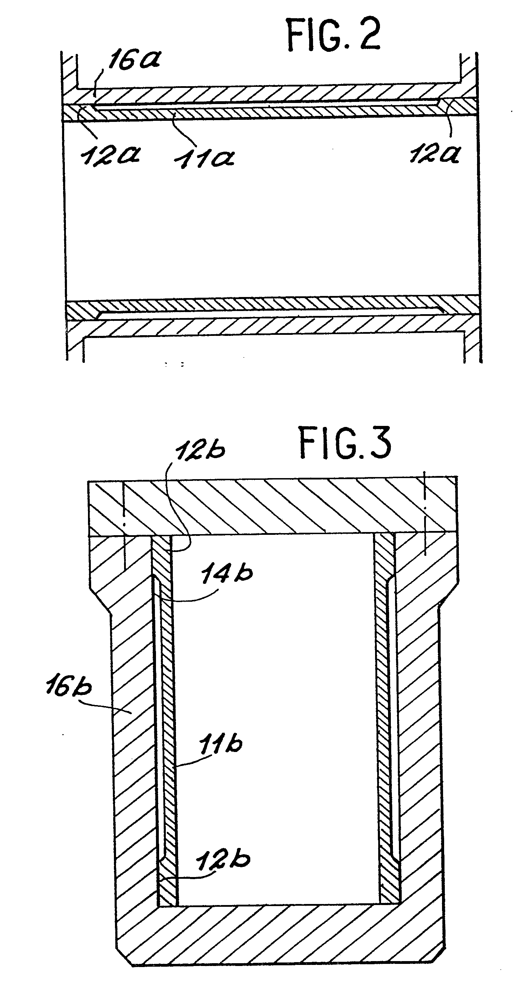

Un exemple d'application du dispositif selon l'invention est représenté sur la fig. 2.

Dans cet exemple, l'enveloppe dans laquelle doit être fixé le dispositif selon l'invention est un conduit 16a sous pression et on utilise le dispositif selon l'invention pour limiter les conséquences d'une rupture éventuelle de ce conduit. A cet effet, la pièce annulaire présente la forme d'une virole 11a portant à chacune de ses extrémités une série de patins 12a régulièrement répartis sur sa périphérie. La virole 11a s'étend sur toute la longueur du conduit 16a et elle constitue ainsi un manchon de sécurité permettant de limiter le débit de fuite du conduit à une valeur donnée en cas de rupture de ce conduit. Dans ce cas, la virole 11a constitue à la fois le dispositif de fixation démontable et la structure interne que l'on désire fixer à l'intérieur du conduit.

Un tel manchon de sécurité peut notamment être monté dans un conduit du circuit primaire d'un réacteur nucléaire à eau sous pression, comme l'illustre notamment la demande de brevet européen EP-A1-0 028 189 au nom du Commissariat à l'Energie Atomique.

Comme l'illustre la fig. 3, le dispositif selon l'invention peut aussi remplir la fonction de manchon de sécurité à l'intérieur d'un récipient sous pression 16b présentant une paroi interne 14b de section circulaire. Comme dans l'application décrite en se référant à la fig. 2, la pièce annulaire déformable présente alors la forme d'une virole 11b portant une série de patins 12b régulièrement répartis à chacune de ses extrémités. La virole 11b s'étend alors de préférence sur toute la hauteur du récipient 16b.

Toutefois, la pièce annulaire déformable constituant le dispositif de fixation démontable selon l'invention peut aussi être distincte de la structure interne que l'on désire fixer à l'intérieur de l'enveloppe.

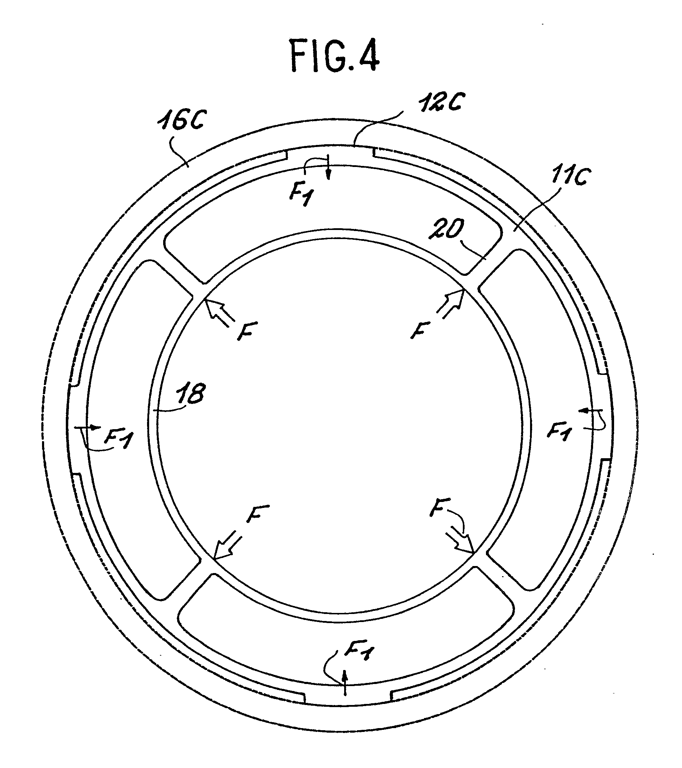

Dans cet esprit, on a représenté sur la fig. 4 l'application du dispositif selon l'invention à la fixation à l'intérieur d'un conduit externe 16c d'un conduit coaxial interne 18. Le conduit interne 18 peut servir notamment à séparer deux écoulements en sens inverse du fluide caloporteur dans le circuit primaire d'un réacteur nucléaire. Une illustration en est également donnée par la demande de brevet européen EP-A1-0 028 189 précédemment mentionnée.

Comme l'illustre la fig. 4, le dispositif de fixation du conduit 18 à l'intérieur du conduit 16c comprend, conformément à l'invention, une ou plusieurs pièces annulaires déformables 11c munies à leur périphérie de patins régulièrement répartis 12c.

Les pièces 11c peuvent être constituées par plusieurs anneaux régulièrement répartis sur toute la longueur du conduit 18. Toutefois, lorsque le conduit 16c est un conduit sous pression, on peut utiliser le dispositif de fixation pour remplir la fonction de manchon de sécurité décrite précédemment en se référant à la fig. 2. La pièce 11c est alors constituée par une virole unique s'étendant sur toute la longueur du conduit 16c.

Lorsqu'on dispose de moyens d'application des forces radiales F sur la ou les pièces 11c qui peuvent être introduits entre ces pièces et le conduit interne 18, le supportage de ce dernier par le dispositif selon l'invention peut être réalisé par tout moyen de liaison et notamment par des ailettes laissant libres les zones de la ou des pièces 11c situées entre les patins, de façon à permettre la déformation de ces pièces.

Cependant, on comprendra aisément que dans la plupart des cas, l'encombrement des moyens pour appliquer les forces radiales F est trop important pour permettre leur introduction entre le dispositif de fixation et le conduit interne. Dans ce cas le plus usuel représenté sur la fig. 4, il est donc nécessaire que les moyens par lesquels le conduit interne 18 est fixé à la ou aux pièces 11c assurent simultanément la transmission à celles-ci des forces radiales F qui sont appliquées à l'intérieur du conduit 18.

Comme l'illustre la fig. 4, ces moyens de liaison sont alors constitués par des ailettes 20 qui sont disposées radialement selon les plans médians par rapport aux espaces séparant les patins 12c, c'est-à-dire à 45° par rapport aux patins lorsque ceux-ci sont au nombre de quatre, comme l'illustre la fig. 4.

Bien que l'invention soit particulièrement adaptée à la fixation de structures internes à l'intérieur des enveloppes telles que les récipients ou les conduits sous pression du circuit primaire d'un réacteur nucléaire, on rappelle qu'elle n'est pas limitée à cette application.

De plus, si le dispositif selon l'invention peut constituer en lui-même la structure interne à fixer comme l'illustrent les fig. 2 et 3 et s'il peut servir comme l'illustre la fig. 4 à fixer un conduit interne à l'intérieur d'un conduit de plus grand diamètre, on conçoit qu'il peut aussi servir à fixer une structure interne de toute autre nature contre la paroi interne de section circulaire d'une enveloppe quelconque.

## Revendications

1. Dispositif de fixation démontable d'une structure interne (11, 18) contre une paroi (14) de section circulaire formée à l'intérieur d'une enveloppe (16), caractérisé en ce qu'il comprend au moins une pièce annulaire déformable (11, 11a, 11b, 11c) comportant des patins en relief (12, 12a, 12b, 12c) régulièrement répartis sur la périphérie de sa face externe, le diamètre extérieur de ladite pièce au droit des patins étant légèrement supérieur au diamètre de ladite paroi interne lorsque le dispositif est au repos, et pouvant être réduit à une valeur inférieure au diamètre de ladite paroi interne lorsque des forces radiales (F) sont appliquées entre les patins à l'intérieur de ladite pièce annulaire déformable.

2. Dispositif selon la revendication 1, caractérisé en ce que, l'enveloppe (16a, 16b) étant sous pression, la pièce annulaire déformable (11a, 11b) présente la forme d'une virole comportant une série de patins (12a, 12b) en relief à chacune de ses extrémités, ladite virole constituant une structure interne de sécurité permettant de limiter à une valeur donnée le débit de fuite en cas de rupture de l'enveloppe sous pression (fig. 2a, 2b).

3. Dispositif selon la revendication 1, caractérisé en ce que la structure interne comporte un conduit interne (18) relié à ladite pièce annulaire déformable (11c) par des ailettes radiales (20) situées entre les patins, de telle sorte que lesdites forces radiales (F) puissent être appliquées au conduit interne (18) et transmises à la pièce annulaire déformable (11c) par lesdites ailettes.

4. Dispositif selon la revendication 3, caractérisé en ce que, l'enveloppe (16c) étant sous pression, la pièce annulaire déformable (11c) présente la forme d'une virole comportant une série de patins (12c) en relief à chacune de ses extrémités, ladite virole constituant une structure interne de sécurité permettant de limiter à une valeur donnée le débit de fuite en cas de rupture de l'enveloppe sous pression (fig. 4).

5. Dispositif selon la revendication 3, caractérisé en ce que le conduit interne (18) est relié par des ailettes (20) à plusierus pièces annulaires déformables (11c) réparties le long du conduit.

## Patentansprüche

1. Zerlegbare Befestigungsanordnung zur Befestigung einer inneren Struktur (11, 18) an einer Wand (14) von kreisförmigem Querschnitt, die im Innern einer Hülle (16) ausgebildet ist, dadurch gekennzeichnet, dass sie wenigstens ein ringförmiges, verformbares Teil (11, 11a, 11b, 11c) enthält, das vorstehende Ansätze (12, 12a, 12b, 12c) aufweist, die am Umfang seiner Aussenfläche gleichmässig verteilt angeordnet sind, wobei der Aussendurchmesser des genannten Teils rechts von den Ansätzen leicht grösser ist als der Durchmesser der Innenwand, wenn die Anordnung entspannt ist, und auf eine Grösse geringer als der Durchmesser der genannten Innenwand verringert werden kann, wenn radiale Kräfte (F) zwischen die Ansätze im Innern des genannten verformbaren ringförmigen Teil zugeführt werden.

2. Anordnung nach Anspruch 1, dadurch gekennzeichnet, dass, wenn die Hülle (16a, 16b) unter Druck steht, das ringförmige verformbare Teil (11a, 11b) die Form eines Ringes hat, der eine Serie von vorstehenden Ansätzen (12a, 12b) an jedem seiner Enden aufweist, welcher Ring eine innere Sicherheitsstruktur bildet, die es erlaubt, die Leckrate im Falle eines Bruchs der unter Druck stehenden Hülle auf einen gegebenen Wert zu begrenzen (Fig. 2a, 2b).

3. Anordnung nach Anspruch 1, dadurch gekennzeichnet, dass die innere Struktur eine Innenleitung (18) aufweist, die mit dem genannten ringförmigen, verformbaren Teil (11c) durch radiale Stege (20) verbunden ist, die zwischen den Ansätzen derart angeordnet sind, dass die radialen Kräfte (F) auf die Innenleitung (18) zur Wirkung gebracht und auf das ringförmige, verformbare Teil (11c) durch die genannten Stege übertragen werden können.

4. Anordnung nach Anspruch 3, dadurch gekennzeichnet, dass, wenn die Hülle (16c) unter Druck ist, das ringförmige, verformbare Teil (11c) die Form eines Ringes hat, der eine Serie von vorstehenden Ansätzen (12c) an jedem seiner Enden aufweist, wobei der Ring einen inneren Sicherheitsaufbau bildet, der es erlaubt, die Leckrate im Falle eines Bruchs der unter Druck stehenden Hülle auf einen gegebenen Wert zu begrenzen (Fig. 4).

5. Anordnung nach Anspruch 3, dadurch gekennzeichnet, dass die Innenleitung (18) durch Stege (20) mit mehreren ringförmigen, verformbaren Teilen (11c) verbunden ist, die längs der Leitung verteilt sind.

**Claims**

1. Device for the detachable fixing of an internal structure (11, 18) to a wall (14) having a circular cross-section formed within an envelope (16), characterized in that it comprises at least one deformable annular member (11, 11a, 11b, 11c) having blocks (12, 12a, 12b, 12c) in relief regularly distributed over the periphery of its outer face, the external diameter of said member to the right of the blocks slightly exceeding the diameter of the inner wall, when the device is in the inoperative state, and which can be reduced to a value smaller than the diameter of said inner wall when radial forces (F) are applied between the blocks within said deformable annular member.

2. Device according to claim 1, characterized in that with the envelope (16a, 16b) pressurized, the deformable annular member (11a, 11b) is in the form of a ferrule having a series of blocks (12a, 12b) in relief at each of its ends, said ferrule constituting an internal safety structure making it possible to limit to a given value the leakage flow in the case of the pressurized envelope fracturing (figs. 2a, 2b).

3. Device according to claim 1, characterized in that the internal structure (18) has an inner pipe connected to said deformable annular member (11c) by radial fins (20) located between the blocks, in such a way that the radial forces (F) can be applied to the inner pipe (18) and can be transmitted to the deformable annular member (11c) by said fins.

4. Device according to claim 3, characterized in that with the envelope (16c) under pressure, the deformable annular member is in the form of a ferrule having a series of blocks (12c) in relief at each of its ends, said ferrule constituting an internal safety structure making it possible to limit to a given value the leakage flow in the case of the pressurized envelope fracturing (fig. 4).

5. Device according to claim 3, characterized in that the inner pipe (18) is connected by fins (20), to several deformable annular members (11c) arranged along the pipe.

# FIG.1

# FIG. 2

16a

12a    11a    12a

# FIG. 3

12b

14b

16b

11b

12b

# FIG.4